# EUROPEAN PATENT SPECIFICATION

(11) **EP 2 540 167 B1**
(45) Date of publication and mention of the grant of the patent: **05.04.2017**
(21) Application number: 12006362.3
(22) Date of filing: 10.09.2012
(51) Int. Cl.: A23G 1/00, A23G 3/22, A23G 3/34, A23G 1/30, A23G 1/54, A23G 3/54

(54) **Enrobing of articles with chocolate and chocolate-like mass**
Ummantelung von Gegenständen mit Schokolade und schokoladenähnlicher Masse
Enrobage d'articles en chocolat avec une masse de type chocolat

(43) Date of publication of application: 02.01.2013
(73) Proprietor: Aasted ApS, 3520 Farum (DK)
(72) Inventor: Holmud, Dennis, DK-2860 Søborg (DK); Hedstrøm, Stig, 3060 Espergærde (DK)
(74) Representative: Heiden, Finn

(56) References cited:
- DE-A1- 3 710 539
- DE-A1-102006 054 570
- US-A- 2 280 272
- US-A- 4 032 667

## Description

The present invention concerns an apparatus for enrobing articles with layers of chocolate or chocolate-like mass, comprising a conveyor grid onto which the articles are arranged, which conveyor grid is arranged to transport the articles through the apparatus when being enrobed, an upper flow pan at the top from which the mass is poured as a curtain onto the articles, a lower reservoir tank being open at the top and into which the residual mass is collected, a first conduit, the first end of which is connected with a lower opening in the reservoir tank and the second end of which is arranged at the upper flow pan for transporting mass from the tank to the flow pan, a pump arranged in the first conduit, and a second conduit, the first end of which is adapted to be connected with a supply of tempered mass such as from a tempering machine, that the second end of the second conduit is connected to the first conduit, so that mass in the first and the second conduit is mixed and delivered to the flow pan at the top, according to claim 1.

Generally, chocolate and chocolate-like masses are suspensions of non-fat particles such as sugar, milk powders and cocoa solids mixed up with a liquid fat constituent. Often the fat phase comprises genuine cocoa butter of until around 30% such as for "genuine" chocolate, but may comprise substitutes as well. Such substitutes can be in the form of other types of fat-containing oils. Chocolate-like masses having the cocoa butter replaced wholly or partly by other fats are often named commercially as compound chocolate. Typically, the cocoa butter has been replaced by palm-kernel oil or milk fat, but synthetic fats are also used.

However, for the chocolate and chocolate-like mass used by the apparatus according to the present invention, it is decisive, that whether the fat phase constitutes of genuine cocoa butter or substitutes therefore, the fat phase must be capable of crystallizing into stable crystal types, such as the β-crystals developing in genuine cocoa butter when the mass solidifies.

The chocolate-like mass is brought to a tempered, liquid state and then deposited as a curtain directly onto the article centres at the conveyor grid. Optionally, the conveyor grid may be shaken for obtaining a more even distribution of the chocolate mass or the mass layer may be blown by air nozzles.

By the tempering process the mass is initially brought to around 40-50°C, where after it is being cooled to around 25-34°C so that crystallisation is initiated. Then the mass is reheated around 0,5-2,0°C for re-melting most of the in-stable crystals in the mass, however preserving a content of stable β-crystals which melts at a higher temperature than the in-stable crystals. In the mass then being ready for depositing the stable crystals are preserved in an amount of typically 0,01% - 5%, preferably in an amount of 0,1% - 2%, however depending on the particular mass type and recipe. The stable crystals could preferably be of the βIV, βV or βVI type developed in the cocoa butter contents.

The invention relates to an apparatus for enrobing articles with layers of chocolate or chocolate-like mass, comprising a conveyor grid onto which the articles are arranged, which conveyor grid is arranged to transport the articles through the apparatus when being enrobed, an upper flow pan at the top from which the mass is poured as a curtain onto the articles, a lower reservoir tank being open at the top and into which the residual mass is collected, a first conduit, the first end of which is connected with a lower opening in the reservoir tank and the second end of which is arranged at the upper flow pan for transporting mass from the tank to the flow pan, a second conduit, the first end of which is adapted to be connected with a supply of tempered mass such as from a tempering machine or an integrated unit, and a pump arranged in the first conduit, according to claim 1.

Basically the prior known enrobers consist of a driven wire grid conveyor belt on which is arranged the articles or articles centres that are to be coated with liquid chocolate. The belt passes over a stirred reservoir tank, which is open at the top and holds the tempered chocolate or chocolate-like mass. A chocolate pump circulates the chocolate mass up a riser pipe and into a top flow pan. The flow pan creates one or two or more curtains of chocolate through which the article centres pass being enrobed with chocolate at their outside, i.e. their top and sides. The stirred reservoir tank retains all residue chocolate mass falling through the grid conveyor belt when the articles are being enrobed. Positioned below the top flow pan and beneath the grid is optionally a bottoming trough. It retains some of the chocolate mass falling from the curtain and feeds it on to a flat plate thus forming a bed of chocolate that moves with the wire grid. The centres entering the enrober are semi-suspended by this bed and then optionally become coated on the underside as well.

An air nozzle is arranged after the chocolate curtain together with a grid shaker frame. The air stream thins the enrobed chocolate layer to the desired thickness and the grid shaker tries to empty as much as possible of the excess chocolate from the grid. A number of grid licking rollers are typically also arranged after the grid shaker for removing further excess chocolate from the grid and the articles. The so removed excess chocolate is returned to the reservoir tank via the grid belt running along a heated extension trough. The aim is that all excess chocolate in the enrobing process is returned to the stirred reservoir tank at the bottom of the enrober and reused.

During the enrobing process is basically consumed 5-20%, typically 10% only of the chocolate mass feed in the curtains of the enrober onto the articles. The rest of the chocolate mass is residue mass being returned through the grid conveyor or wire mesh to the mass in the stirred reservoir tank. When the bottoming enrobing process is performed as well, the total consumed percentage of chocolate decreases further - often to around 5-7%. That is because the bottoming enrobing process in it self only consumes around 3% of the mass required.

Tempered chocolate is continuously feed to the well-known enrobers in amounts corresponding to between two and four times the consumed amount of mass being enrobed onto the articles when they pass through. A conduit holds the tempered chocolate mass being pumped from the tempering machine and to the enrober. The end of the conduit could simply be open and arranged over the stirred reservoir tank or it could be connected to an opening in the side or bottom of the reservoir tank. The result is, that the feed tempered chocolate mass is mixed into the excess mass in the reservoir tank.

As the great amount of continuously returned excess mass in the reservoir tank holds a large amount of heat energy as well as increasing amount of crystals, two precautions are made to reduce the effect of thickening due to crystallisation and solidification. The reservoir tank is heated to a temperature that is 1-2 degrees celcius higher than the temperature of the tempered chocolate mass supplied to the enrober. Also the supplied tempered chocolate mass is typically kept in a so-called "undertempered" state for avoiding excessive uncontrollable crystal growth when being mixed with the crystallised mass in the tank.

The challenge with these widely used enrobers is then, that an uncontrolled crystallisation process goes on in the tank due to the large amount of already well-tempered chocolate mass returned to it during the enrobing process. Typically, is more than 80% of the deposited curtain returned to the tank as residue. The mass in the tank becomes in-homogenous in its constitution regarding crystal content and degree of solidification. Some parts of the mass in the tank has a very high content of crystals and are therefore "thicker" than other parts of the mass having a lesser content of crystals. Continuously is also supplied the fresh tempered mass to the tank, which further provides for creation of in-homogenous mass in the tank.

Within a few hours after production start-up, the mass simply undergoes increasing solidification and lumps with "thicker" chocolate than the rest pops up after typically 6-8 hours. The chocolate gets thicker and thicker until the enrobing process must be interrupted. The mass in the tank becomes more and more in-homogenous, sets of lumps in the tank and to the grid and in the mass curtain is often openings so that some of the articles are not fully covered. The effects are uneven thickness in enrobed layers on articles, shorter shelf-time and to high chocolate consumption. The machine then has to be emptied for chocolate and cleaned before the process can be reassumed from new. With the increasing thickening follows a more "sticky" mass that sets faster and faster on the articles and on the equipment, especially on the grid, the rollers and associated plates on the machine. The enrobed layer on the articles often becomes uncontrollable in thickness. So when the machine at last must be stopped the cleaning procedure to be performed is so much more cumbersome due to the residue mass on the equipment.

So, of several reasons such breaks or interruptions in the production is off-course undesirable. Sharper temperature control and addition of liquefiers to the mass may only prolong the available process time with a few hours.
Another challenge of the known enrobers is, that when the delivered "under"-tempered mass is mixed up into the "over"-tempered mass in the tank, then the resulting mass delivered to the top of the curtain is rather inhomogeneous in its consistency and crystal content. The result is fluctuating or in-consistent quality of the enrobed articles, regarding especially shelf life, gloss appearance and crispy break.

Another challenge with these known enrobers is, that a mass amount of 1-2 times the consumed amount enrobed onto the articles is returned to a tank for renewed heating and tempering. It means, that a total amount of around 2-4 times the actually consumed amount of mass in the enrobing production is continuously delivered to the enrober. The energy consumption to provide that supply of mass is consequently very high in view of the amount of mass consumed in the production. The investment expenses for the tempering apparatus is also very high due to the needed large capacity.

Another "direct-delivery" process and production set-up is also known today, especially when the aim is to better control the tempering state and thickness of the enrobed layer when it's desired to enrobe articles with high consistency in quality.

By that known solution, the reservoir tank at the bottom of the enrober is connected via a pump directly to the chocolate holding tank in which the chocolate mass is heated to around 40-50 degrees Celsius so that it is crystal-free. The holding tank is connected via a pump to a tempering machine. The tempering machine supplies tempered chocolate directly to the top flow pan of the enrober. Consequently, the typically 80% excess chocolate from the enrobing process is taken directly out from the enrobing process after just one through-flow. The excess mass is mixed with the major mass amount and reheated in the holding tank to 40-50 degrees Celsius whereby it is made "crystal-free". So fresh tempered chocolate mass only, is delivered to the flow pan of the enrober. The curtains of the enrober then contains freshly tempered chocolate with a degree of tempering that is controlled to an exact level as desired.

However, as all the excess mass is returned to the holding tank renewed tempering of the complete mass amount must be done. The energy consumption for the complete process is huge. When 80% of the mass is returned, the amount of mass supplied to the enrober is 5 times higher than the amount of mass actually consumed and enrobed onto the articles. The capacity of the tempering apparatus is then 5 times higher as well. When 400kg/h chocolate is enrobed at the articles the required capacity of the tempering apparatus is 2000kg/h. That makes the investment in equipment very high. But also the energy amount in calories to run this process becomes excessively high as it requires 5 times higher energy input as for the prior enrobers. The cost of running the process is then undesirable high. From DE3710539A1 is known an apparatus of the introductory art, by which a first conduit is connecting the reservoir tank with the upper flow pan. A stream of residue mass is then returned from the reservoir tank via the first conduit to the flow pan. The first conduit has a branch to which a second conduit is connected supplying freshly tempered chocolate mass from the tempering machine. A pump is arranged in the first conduit some distance after the conduit branch. After hours of production the chocolate in the flow pan gets thicker and in-homogenous in its consistency due to increasing crystallisation. A homogenous mixing of the thicker mass with the thinner mass is not ensured at the branch.

So with the inventive apparatus the second end of the second conduit is connected to the first conduit, so that mass in the first and the second conduit is mixed and delivered to the flow pan at the top, wherein the second end of the second conduit is connected to the pump, or the pump is arranged in the first conduit before the conduit branch, and a mixing unit is arranged in the first conduit after the branch.

The first stream of mass is being enriched with the mixing of the second stream of mass that is tempered. The tempering of the second stream of mass may be set to the desired degree. It means that it can be "neutrally" tempered - not "under"-tempered nor "over"-tempered. The mixing of the second stream into the first stream of mass being pumped provides a chocolate curtain that is homogenous in consistency and the tempering degree is as desired at the "normal" tempering level. The quality of the enrobed articles is then constant. However, another great advantage is, that it has been possible to run the tempering process in the inventive apparatus for more than 100 or 200 hours if required with a setup, that before it was modified according to the invention, only could produce for up to around 6-8 hours. Before that the mass went so thick, that the process had to be closed down and the enrober washed down before a new production could be started.

The amount of the second stream of mass can be as low as the amount of mass consumed in the enrobing process, so that no surplus of mass is needed in a return flow to the tank as by the prior art. The maximum capacity of the tempering apparatus feeding the enrober with the second stream of mass can then be reduced to at least the half size. Consequently, the expenses of investment is severely reduced. Another benefit, is that the overall energy requirements for running the complete enrobing process inclusive the tempering process is reduced with at least 50%.

The second stream of mass is mixed up into the first stream of mass during its pumping action. The second end of the second conduit is connected to the pump. The embodiment saves space in a compact enrober apparatus and is highly effective regarding mixing as the second stream is delivered directly into the pumping means.

When the second stream of mass is mixed up into the first stream of mass after it being pumped, the pump is arranged in the first conduit before the conduit branch, and a mixing unit is arranged in the first conduit after the branch. Then, the pressure of a standard pump already mounted in the enrober apparatus is used for providing a pump pressure for the mixed streams and the mixer provides the ultimate mixing of the mixed streams into a homogenous stream delivered to the top of the enrober.

With the inventive apparatus a further pump in the second conduit may be adapted to be regulated in its flow capacity by a frequency control of the pump revolutions. Advantageously, the second stream of mass is then regulated to between 5% and 50% of the total amount of mixed mass. Depending of the required amount of mass to be consumed in the enrobing curtain, the amount of the second stream of mass is set so it is equal to or slightly greater than the consumed amount, i.e. 5-25 kg/h greater when the consumed amount left on the articles is 100-200 kg/h.

For re-circulating a small amount of mass and for emptying the residue reservoir tank a third conduit may be arranged, the first end of which is connected to the reservoir tank and the second end of which is adapted to be connected to a storage tank or a tempering apparatus. So, the third stream of mass is returning mass from the residue reservoir to the tank.

When it is required to enrobe the articles with chocolate at the bottom, the first conduit comprise a further branching leading to a bottoming trough for enrobing the underside of the articles. Then, the apparatus has a bottoming trough retaining chocolate falling from the curtain and feeding it to a flat plate adapted to move with the conveyor grid thus forming a bed of chocolate, that moves with the conveyor grid for enrobing the underside of the articles.

The invention is described further in detail in relation to the drawing, at which;
Fig. 1 discloses schematically a traditionally known process and connections of enrober with auxiliary equipment for enrobing articles,
Fig. 2 discloses schematically a layout of an enrober with auxiliary equipment for enrobing articles, in principal known,
Fig. 3 discloses schematically an embodiment of the inventive enrober with auxiliary equipment for enrobing articles,
Fig. 4 discloses schematically another embodiment of the inventive enrober with auxiliary equipment for enrobing articles,
Fig. 5 discloses in perspective an apparatus for enrobing articles with layers of chocolate, and
Fig. 6 discloses the apparatus of figure 5, seen from the side.

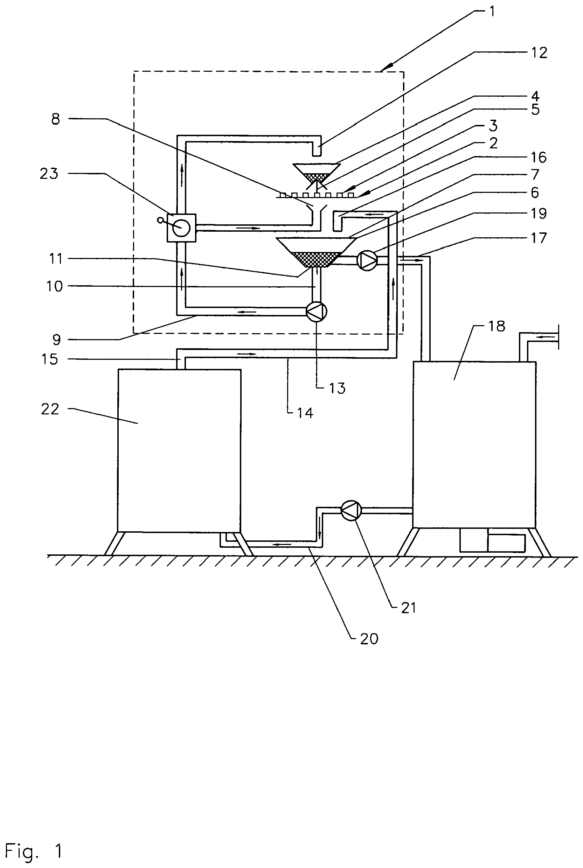

The traditionally known enrober apparatus 1 is schematically disclosed in fig. 1 by punctured line. The apparatus 1 has a conveyor grid 2 onto which the articles 3 are arranged and being transported through the apparatus. At the top of the apparatus is arranged an upper flow pan 4 from which the mass is poured as a schematically disclosed curtain 5 onto the articles 3 to cover them from above with a chocolate layer.

A lower reservoir tank 6 is arranged beneath the grid 2 and is open at the top 7. The residual mass is collected into the tank 6. Positioned below the grid 2 and above the tank 6 is optionally arranged a bottoming trough 8, that is adapted to cover the undersides of the articles with a chocolate layer.

The traditional enrober 1 also comprises a first conduit 9, the first end 10 of which is connected with a lower opening 11 in the reservoir tank 6. The second end 12 of the first conduit 9 is arranged at the upper flow pan 4 for transporting mass from the tank 6 to the flow pan 4. A pump 13 is arranged in the first conduit 9.
The enrober 1 also comprises a second conduit 14, the first end 15 of which is connected to a tempering machine 22 for supplying freshly tempered chocolate mass to the enrober 1. The second end 16 of the second conduit 14 is arranged above tank 6. A third conduit 17 is arranged leading mass from the stirring tank 6 and to a holding tank 18. A pump 19 is arranged in the conduit 17. In the holding tank 18 the temperature is typically between 45 °C and 50 °C for melting away the crystals in the chocolate mass.
A fourth conduit 20 having a pump 21 leads the mass to the tempering machine 22. A valve 23 is arranged in the first conduit 9 for regulating the flow of mass to the bottoming trough 8.

By an example 1600 kg/h of chocolate mass is circulated by the pump 13 in the first conduit 9 and is split into 800 kg/h delivered through the end 12 to the top pane 4 and 800 kg/h delivered to the bottoming trough 8. The consumption at the top of the articles 3 is 75 kg/h and at the undersides thereof 25 kg/h, a total consumption of around 100 kg/h. In this traditional process around 200 kg/h is returned via the conduit 17 to the holding tank 18, so around 300 kg/h is delivered from tempering machine as fresh tempered mass to the second conduit 14.

The amount of tempered chocolate mass delivered is then three times the consumed amount of mass.

The supplied tempered chocolate mass is typically kept in a so-called "undertempered" state for avoiding excessive uncontrollable crystal growth when being mixed with the mass in the stirred tank that already holds highly crystallised mass.

Within a few hours after production start-up, the mass simply undergoes increasing solidification. After typically 6-8 hour lumps of chocolate becomes more and more visible in the chocolate. It gets thicker and thicker until the enrobing process must be interrupted. The machine then has to be emptied for chocolate and cleaned before the process can be reassumed from new. With the increasing thickening follows a more "sticky" mass that sets faster and faster on the articles and on the equipment, especially on the grid, the rollers and associated plates on the machine. The enrobed layer on the articles often becomes uncontrollable in thickness. So when the machine at last must be stopped the cleaning procedure to be performed is so much more cumbersome due to the residue mass on the equipment.

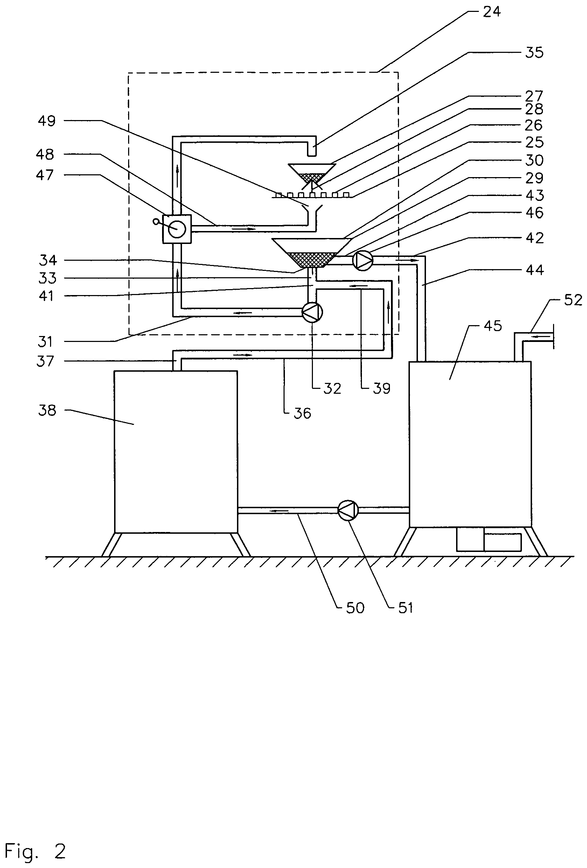

The enrober apparatus 24 disclosed in figure 2 has a conveyor grid 25 onto which the articles 26 are arranged. The conveyor grid 25 transports the articles 26 through the apparatus 24 during the enrobing process. An upper flow pan 27 is arranged at the top of the enrober. From the flow pan 27 the mass is poured as a curtain 28 onto the articles 26.
A lower reservoir tank 29 is open at the top 30 and is arranged at a position below the grid for collecting all the residual mass.
A first conduit 31 with a pump 32 is arranged for transporting mass from the tank 29 and to the flow pan 27 at the top. The first end 33 of the first conduit 31 is connected to a lower opening 34 in the reservoir tank 29. The second end 35 of the conduit 31 is arranged at the upper flow pan 27.
A second conduit 36 has a first end 37 that is connected to a tempering apparatus 38, and the second end 39 of which is connected to the first conduit 31. By the embodiment disclosed in figure 2 the second end 39 of the second conduit 36 is connected to a branch 41 arranged in the first conduit 31. A third conduit 42 is arranged with its first end 43 connected to the open reservoir tank 29.The second end 44 of the conduit 42 is connected to a storage tank 45. A pump 46 is arranged in the third conduit 43 for pumping mass from the open tank 29 and to the storage tank 45.

A three way valve 47 is arranged in the first conduit 31 for leading and controlling chocolate amount feed to an optionally bottoming trough 49 via a conduit 48. The bottoming trough is as such not part of the core of the invention. It is being feed with chocolate via the conduit 48 as disclosed or via the curtain of chocolate falling from the upper flow pan 27. By a preferred and widely used configuration is the bottoming trough a flat plate adapted to move with the conveyor grid thus forming a bed of chocolate that moves with the conveyor grid for enrobing the underside of the articles.
A fourth conduit 50 connects the storage tank 45 with the tempering machine 38. A pump 51 is arranged in the conduit 50.

By the embodiment disclosed in figure 2 the pump 32 is arranged in the conduit 31 after the branch 41, seen in the flow-direction of the mass. The fresh tempered chocolate mass in the second conduit 36 is delivered through the second end 39 of the conduit 36 and into the branch 41 in the first conduit 31. The fresh tempered mass is then delivered into the stream of mass already in the first conduit 31. Thereafter the mass brought together enters the pump 32 in which it is thoroughly mixed to a homogeneous consistency and is pumped further on in the conduit 31. The pump 32 is typically adapted to be regulated in flow capacity by regulating the frequency and thereby revolutions per minute of the electric motor of the pump. Thereby, the flow amounts of the first mass stream in the first conduit 31 and of the second mass stream in the second conduit 36 are controlled in relation to each other.

A production run with the enrobing apparatus of figure 2 of enrobing bar centres with dark chocolate was performed. The amount of chocolate in the first conduit 31 was 1600 kg/h. At the three-way valve 47 it was split into a flow of 800 kg/h delivered to the upper flow pan 27 and 800 kg/h delivered to the bottoming trough 49. The total consumption was 96-104 kg/h, approximately 100 kg/h. So 100 kg/h was continuously delivered to the storage tank 45 inlet 52 for keeping a constant level in the tank. In the third conduit 42 was returned 50 kg/h to the storage tank 45.
In the fourth conduit 50 was then delivered 150 kg/h to the tempering machine 38 which was tempered to the desired "normal" or "neutral" tempering state. The flow of 150 kg/h tempered chocolate mass was then delivered via the second conduit 36 to the branch 41 where it was thoroughly mixed into the first flow of mass constituting a total of around 1600 kg/h when being mixed and pumped further on by the pump 32.

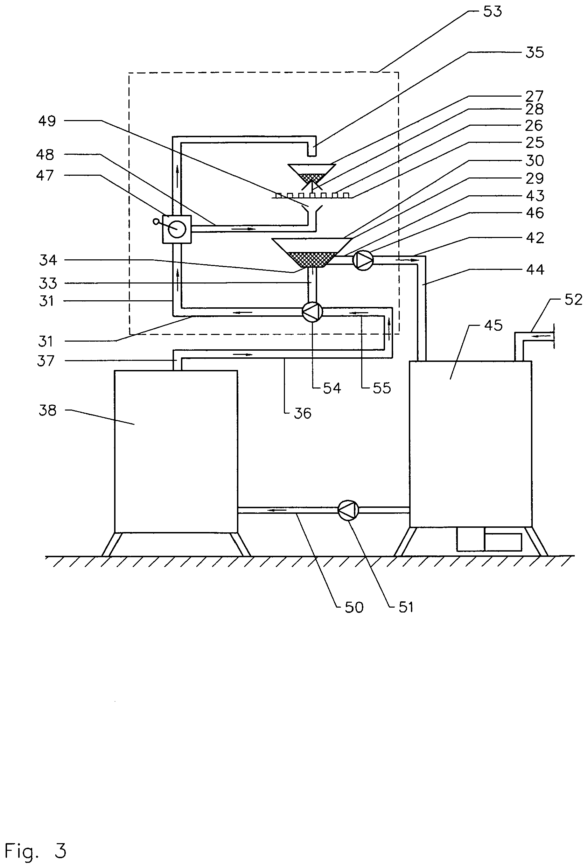

The mass in the reservoir tank 29 was homogeneous and kept its correct tempering degree for many hours. The tendency to builds up and solidifying on apparatus parts and grid was much lesser in comparison with tests made on traditional apparatus with the same chocolate. Consequently, the above described production run with the apparatus could go on in over 44 hours before it was necessary to stop and clean up the apparatus. It was run at least 34 hours longer than the traditional apparatus with the same chocolate and articles. A direct cost-saving benefit in a production planning sequence.
The amount of mass in the third conduit 42 was reduced to around 5 kg/h and the process still ran satisfactory. The tempered amount of mass was then reduced to 105 kg/h. In comparison to the prior art the required tempering capacity is then reduced to less than 50% - nearly to 1/3 of what was earlier required. The savings in investments for tempering equipment is then really worth to notice for the manufacturer.
During all testing samples of chocolate was taken for validating the required tempering quality. By another test with milk chocolate it was possible to run the enrober with the new inventive process for more than 100 hours before it was stopped. All the time the chocolate had the desired homogeneity and temper.
An embodiment of the inventive apparatus 53 is disclosed in figure 3. The enrobing apparatus 53 has the same parts and configuration as in the embodiment of figure 2 apart from that the pump 54 in the first conduit 31 has an extra opening to which the second end 55 of the conduit 36 is connected. The second stream of well-tempered chocolate mass is then mixed and seeded up homogeneously into the first stream of mass directly in the pump 54. The embodiment saves space in a compact enrober apparatus and is highly effective regarding mixing as the second stream is delivered directly into the pumping means. The solution is also especially cost-effective as only one part is required, the pump 54. The pump may advantageously be controlled by a frequency control of the revolutions.

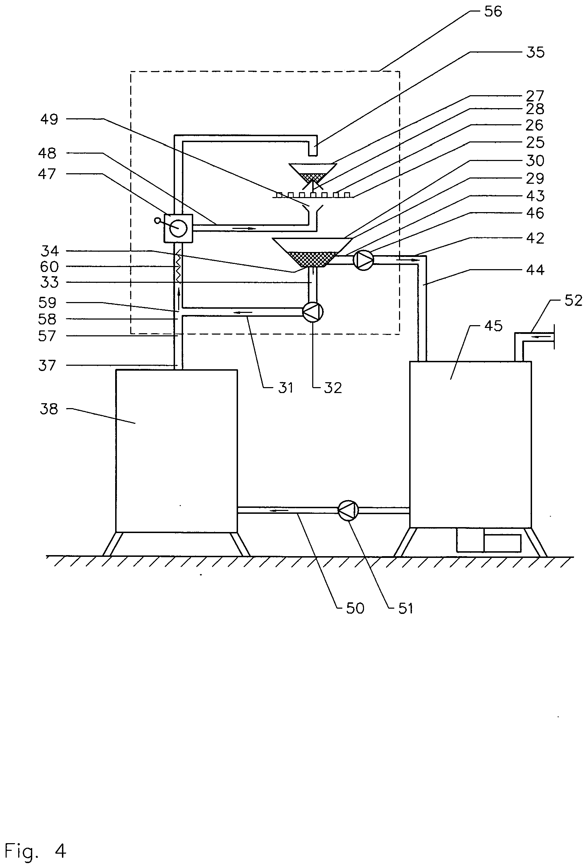

Another embodiment of the inventive apparatus 56 is disclosed in figure 4. The enrobing apparatus 56 has the same parts and configuration as in the embodiment of figure 2 apart from that the second end 58 of the second conduit 57 is connected to a branch 59 arranged in the first conduit 31. A mixing unit 60 is advantageously arranged in the first conduit 31 at a position after the branch 59. Typically before the valve 47 as disclosed in figure 4. The second stream of well-tempered chocolate mass is then mixed and seeded up homogeneously into the first stream of mass. The embodiment saves space in a compact enrober apparatus and is highly effective regarding mixing as the first and second streams are delivered directly to a mixer 60 after being brought together. The pump 32 is advantageously controlled by a frequency control of the pump revolutions. This provides for a continuous flow of chocolate in the circuit and consequently eliminates chocolate standing still.

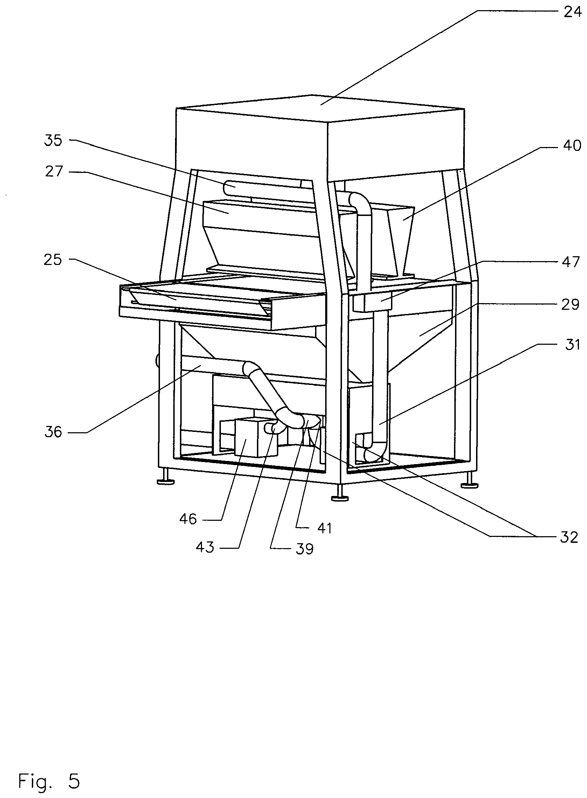

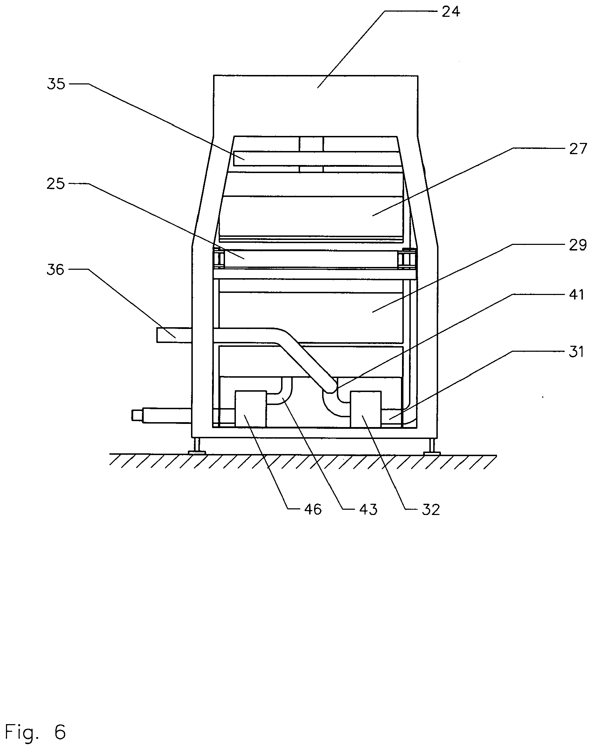

The schematic disclosed embodiment 24 in figure 2 is also disclosed in figure 5. The apparatus 24 is in figure 5 disclosed without covering doors and plates so that it is possible to se inside the apparatus. The compact arrangement of the first conduit 36 and the pump 32 is disclosed at the bottom of the apparatus 24. The apparatus is a traditional used type which advantageously is modified. In figure 6 the apparatus 24 is seen from the side. The compact arrangement of the second conduit 36 connected to the branch 41 arranged in the first conduit 31, is easily recognized. A blower 40 is arranged after the flow pan 27, seen in the moving direction of the grid. The articles are then enrobed and thereafter being blown to the desired thickness of the chocolate layer. Many combinations of flow pans and blowers are possible as long as the core of the invention is not left. For example may one flow pan and a blower be arranged followed by a second flow pan for another type of chocolate and a further blower.

## Claims

1. Apparatus (24, 53, 56) for enrobing articles (26) with layers of chocolate or chocolate-like mass, comprising
a conveyor grid (25) onto which the articles are arranged,
which conveyor grid (25) is arranged to transport the articles (26) through the apparatus (24, 53, 56) when being enrobed,
an upper flow pan (27) at the top from which the mass is poured as a curtain (28) onto the articles(26),
a lower reservoir tank (29) being open at the top (30) and into which the residual mass is collected ,
a first conduit (31), the first end (33) of which is connected with a lower opening (34) in the reservoir tank (29) and the second end (35) of which is arranged at the upper flow pan (27) for transporting mass from the tank (29) to the flow pan (27),
a pump (32, 54) arranged in the first conduit (31),
and a second conduit (36, 57), the first end (37) of which is adapted to be connected with a supply of tempered mass such as from a tempering machine (38),
that the second end (39, 55, 58) of the second conduit (36, 36, 57) is connected to the first conduit (31), so that mass in the first and the second conduit is mixed and delivered to the flow pan (27) at the top,
**characterised in,**
**that** the second end (55) of the second conduit (36) is connected to the pump (54), or that the pump (32) is arranged in the first conduit (31) before the conduit branch (59), and that a mixing unit (60) is arranged in the first conduit (31) after the branch (59).

2. Apparatus according to claim 1, **characterised in, that** the pump (32, 54) arranged in the first conduit (31) is adapted to be regulated in its flow capacity by a frequency control of the pump revolutions.

3. Apparatus according to claim 1, **characterised in, that** a third conduit (42), the first end (43) of which is connected to the reservoir tank (29) and the second end (44) of which is adapted to be connected to a storage tank (45) or a tempering apparatus is arranged.

4. Apparatus according to claim 1, **characterised in, that** a bottoming trough (49) being feed with chocolate is adapted to move with the conveyor grid (25) thus forming a bed of chocolate that moves with the conveyor grid for enrobing the underside of the articles.

## Patentansprüche

1. Vorrichtung (24, 53, 56) zur Ummantelung von Gegenständen (26) mit Schichten aus Schokolade oder schokoladenartiger Masse, umfassend
ein Fördergitter (25), auf dem die Gegenstände angeordnet sind,
wobei das Fördergitter (25) angeordnet ist, um die Gegenstände (26) durch die Vorrichtung (24, 53, 56) zu transportieren, wenn sie ummantelt werden,
eine obere Strömungswanne (27), aus deren Oberseite die Masse als Vorhang (28) auf die Gegenstände (26) gegossen wird,
einen unteren Vorratsbehälter (29), der an der Oberseite (30) offen ist und in dem die Restmasse gesammelt wird,
eine erste Leitung (31), deren erstes Ende (33) mit einer unteren Öffnung (34) im Vorratsbehälter (29) verbunden ist und deren zweites Ende (35) an der oberen Strömungswanne (27) für den Transport von Masse vom Behälter (29) zur Strömungswanne (27) angeordnet ist, eine Pumpe (32, 54), die in der ersten Leitung (31) angeordnet ist,
und eine zweite Leitung (36, 57), deren erstes Ende (37) zur Verbindung mit einer Zufuhr von temperierter Masse, beispielsweise von einer Temperiermaschine (38), ausgelegt ist,
dass das zweite Ende (39, 55, 58) der zweiten Leitung (36, 36, 57) mit der ersten Leitung (31) verbunden ist, derart, dass Masse in der ersten und in der zweiten Leitung vermischt und zur Strömungswanne (27) an der Oberseite abgegeben wird,
**dadurch gekennzeichnet,**
**dass** das zweite Ende (55) der zweiten Leitung (36) mit der Pumpe (54) verbunden ist, oder dass die Pumpe (32) in der ersten Leitung (31) vor der Leitungsabzweigung (59) angeordnet ist, und dass eine Mischeinheit (60) in der ersten Leitung (31) nach der Abzweigung (59) angeordnet ist.

2. Vorrichtung nach Anspruch 1, **dadurch gekennzeichnet, dass** die in der ersten Leitung (31) angeordnete Pumpe (32, 54) dazu ausgelegt ist, in ihrer Durchflusskapazität durch eine Frequenzsteuerung der Pumpenumdrehungen reguliert zu werden.

3. Vorrichtung nach Anspruch 1, **dadurch gekennzeichnet, dass** eine dritte Leitung (42), deren erstes Ende (43) mit dem Vorratsbehälter (29) verbunden ist und deren zweites Ende (44) zur Verbindung mit einem Lagerbehälter (45) oder einer Temperiervorrichtung ausgelegt ist, angeordnet ist.

4. Vorrichtung nach Anspruch 1, **dadurch gekennzeichnet, dass** eine Bodenmulde (49), der Schokolade zugeführt wird, zur Bewegung mit dem Fördergitter (25) ausgelegt ist, so dass ein Bett aus Schokolade gebildet wird, das sich zur Ummantelung der Unterseite der Gegenstände mit dem Fördergitter bewegt.

## Revendications

1. Appareil (24, 53, 56) pour enrober des articles (26) avec des couches de chocolat ou une masse semblable à du chocolat, comprenant :
une grille de convoyeur (25) sur laquelle les articles sont disposés,
laquelle grille de convoyeur (25) est conçue pour transporter les articles (26) à travers l'appareil (24, 53, 56) lorsqu'ils sont enrobés,
une cuvette d'écoulement supérieure (27) au niveau de la partie supérieure depuis laquelle la masse est versée, sous la forme d'un rideau (28), sur les articles (26),
une cuve de réservoir inférieure (29) qui est ouverte au niveau de la partie supérieure (30) et dans laquelle la masse résiduelle est recueillie,
un premier conduit (31), dont la première extrémité (33) est raccordée à une ouverture inférieure (34) ménagée dans la cuve de réservoir (29) et dont la seconde extrémité (35) est disposée au niveau de la cuvette d'écoulement supérieure (27) pour transporter une certaine masse depuis la cuve (29) jusqu'à la cuvette d'écoulement (27),
une pompe (32, 54) disposée dans le premier conduit (31),
et un deuxième conduit (36, 57), dont la première extrémité (37) est conçue pour être raccordée à une alimentation en masse tempérée, par exemple, d'une machine de tempérage (38),
que la seconde extrémité (39, 55, 58) du deuxième conduit (36, 36, 57) est raccordée au premier conduit (31) de telle sorte que la masse dans le premier et le deuxième conduit soit mélangée et fournie à la cuvette d'écoulement (27) au niveau de la partie supérieure,
**caractérisé**
**en ce que** la seconde extrémité (55) du deuxième conduit (36) est raccordée à la pompe (54) ou en ce que la pompe (32) est disposée dans le premier conduit (31) avant la division (59) du conduit et
**en ce qu'**une unité de mélange (60) est disposée dans le premier conduit (31) après la division (59).

2. Appareil selon la revendication 1, **caractérisé en ce que** la pompe (32, 54) disposée dans le premier conduit (31) est conçue de sorte à pouvoir réguler sa capacité d'écoulement au moyen d'un réglage de la fréquence des révolutions de la pompe.

3. Appareil selon la revendication 1, **caractérisé en ce qu'**un troisième conduit (42), dont la première extrémité (43) est raccordée à la cuve de réservoir (29), et dont la seconde extrémité (44) est conçue pour être raccordée à une cuve de stockage (45) ou à un appareil de tempérage, est disposé.

4. Appareil selon la revendication 1, **caractérisé en ce qu'**un bac à trous borgnes (49) qui est approvisionné en chocolat est conçu pour se déplacer avec la grille de convoyeur (25), ce qui permet de former un lit de chocolat qui se déplace avec la grille de convoyeur de sorte à enrober la face inférieure des articles.
